# EUROPEAN PATENT APPLICATION

(11) **EP 1 852 038 A1**
(43) Date of publication of application: **07.11.2007**
(21) Application number: 06113517.4
(22) Date of filing: 04.05.2006
(51) Int. Cl.: A47C 21/08, A47D 15/00, F16C 11/10

(54) **Rotating shaft for handrail of bed**

(71) Applicant: Wu, Sung-Tsun, Pan Chiao City, Taipei Hsien (TW)
(72) Inventor: Wu, Sung-Tsun, Pan Chiao City, Taipei Hsien (TW)
(74) Representative: Viering, Jentschura & Partner

(57) **Abstract**

A rotating shaft (1) for a handrail of a bed comprises: two shells (10,11); a spring (12); a gear (13); and a button (14), wherein two fixing pillars (132) are protrudent from one side of the gear (13), two matched chambers are formed on the shells (10,11), respectively, for being coupled with each other. Two fixing trenches (102) are formed in the chamber of one of the shells (10,11) for holding the fixing pillars (132) of the gear (13). A button trench is formed on the backside of the fixing trenches (102) for holding a button (14). The shells (10,11) are coupled with each other after the spring (12) and the gear (13) are located in the chambers of the shells (10,11), whereby the fixing pillars (132) of the gear (13) are separable from the fixing trenches (102) of the shell by pressing the button (14) such that the other shell is angularly rotatable.

## Description

### FIELD OF THE INVENTION

The present invention relates to an easily operable rotating shaft for a handrail of a bed, which is suitable for a baby bed, a sickbed or the like.

### BACKGROUND OF THE INVENTION

The protection handrails are usually mounted beside baby beds and sickbeds to protect babies, children, and patients from the risk of fall. Two turning devices are mounted on both ends of the handrails, respectively, so as to stand up or fold up the handrails by releasing these two turning devices simultaneously.

A conventional turning device for handrail was disclosed in US Patent No. 5,671,490, entitled "COLLAPSIBLE BED RAIL STRUCTURE", invented by the present inventor. In this cited reference, the turning device comprises a slidable insertion device, a bracket, an elastic device, and a resisting device, wherein the elastic device is connected to one end of the resisting device and the slidable insertion device is connected to the other end of the resisting device. A U-shaped trench is formed on the bracket for the insertion of the slidable insertion device, whereby the slideable insertion device is slidably mounted in the bracket by using the resisting device and the elastic device, which are connected to the inside of the slideable insertion device, so as to overturn the handrail.

However, when the above-mentioned turning devices are applied to a shorter baby bed, a single user may be able to release the turning devices on both ends of the handrail simultaneously. But, this user is unable to release the turning devices on both ends of the handrail simultaneously if these turning devices are applied to a longer sickbed. As a result, the handrail can be stood up or folded up by the cooperation of two users. Besides, it is very inconvenient to operate when only one healthcare worker is available.

Whereas the foregoing description, the present inventor makes diligent studies in providing the consumers with a rotating shaft that can be released easily by a single user.

### SUMMARY OF THE INVENTION

It is a main object of the present invention to provide a rotating shaft that can be released easily by a single user.

In order to achieve the above-mentioned objects, a rotating shaft for a handrail of a bed comprises: two shells; a spring; a gear; and a button, wherein two fixing pillars are protrudent from one side of the gear, two matched chambers are formed on the shells, respectively, for being coupled with each other. Two fixing trenches are formed in the chamber of one of the shells for holding the fixing pillars of the gear. A button trench is formed on the backside of the fixing trenches for holding a button. The shells are coupled with each other after the spring and the gear are located in the chambers of the shells, whereby the fixing pillars of the gear are separable from the fixing trenches of the shell by pressing the button such that the other shell is angularly adjustable by rotation.

The aforementioned objects and advantages of the present invention will be readily clarified in the description of the preferred embodiments and the enclosed drawings of the present invention.

### BRIEF DESCRIPTION OF THE DRAWINGS

FIG. 1 is a three-dimensional view showing a preferred embodiment of the present invention.
FIG. 2 is a decomposed view showing the components of the first preferred embodiment of the present invention.
FIG. 3 is a cross-sectional, assembled view showing the preferred embodiment of the present invention.
FIG. 4 is a schematic view showing the use of the preferred embodiment of the present invention.

### DETAILED DESCRIPTION OF THE PREFERRED EMBODIMENT

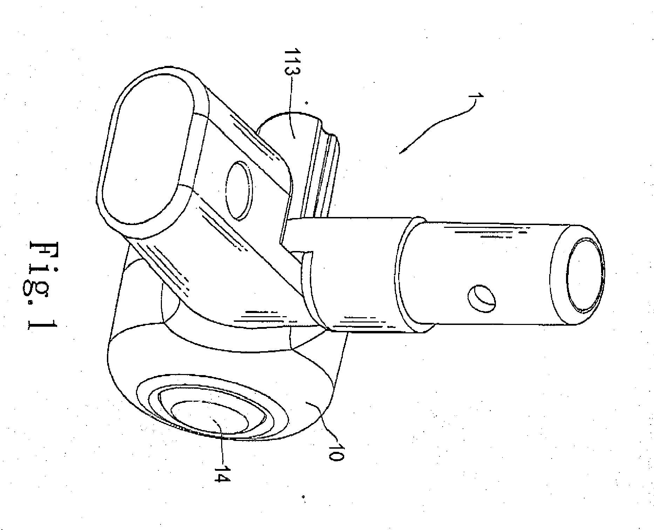

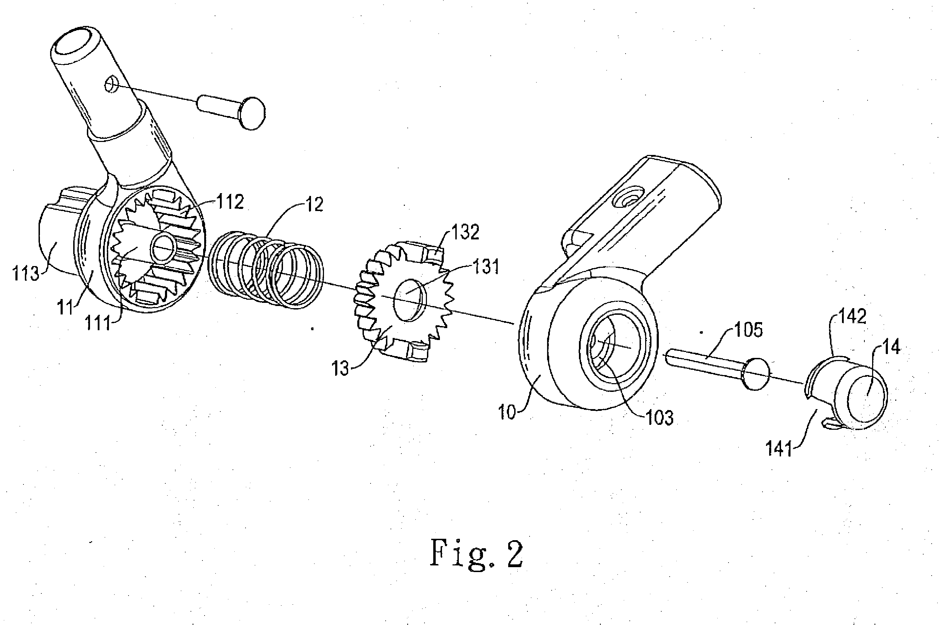

Referring to FIG. 1 through FIG. 3 simultaneously, a rotating shaft 1 of the present invention comprises two shells 10, 11, a spring 12, a gear 13, and a button 14, wherein two matched chambers, which are formed on one side of these two shells 10, 11, respectively, can be jointed together. The other side of the shells 10, 11 is designed to be a coupling part for being coupled with another tube. A coupling pillar 101 is protrudent from the center of the chamber of the shell 10, wherein a trench is formed on the backside of the coupling pillar 101. On the bottom of the trench, two arc-shaped openings 103 and 104 are formed oppositely on the both sides of the coupling pillar 101. In addition, two fixing trenches 102 are formed on the shell 10 adjacent to the openings 103 and 104, respectively. A larger-diameter protrudent pillar III is located on the center of the chamber of the shell 11 for holding the coupling pillar 101 of the shell 10. An inner-toothed trench 112, which is engageable with the gear 13, is formed on the periphery of the chamber of the shell 11. A horizontal jointer 113 is located on the backside of the chamber of the shell 11.

The gear 13 has a tooth-shaped periphery and a central hole 131 on the center thereof, wherein the central hole 131 matches with the protrudent pillar 11 of the shell 11 in diameter dimension. Two fixing pillars 132 are mounted oppositely on the same plane of the gear 131.

The button 14 is a hollow cylinder having a top surface. Two trenches 141 are formed oppositely on the body of cylinder. Besides, two protrudent flanges 142 are mounted oppositely on the outer surface of the bottom of the remained body of the cylinder.

In order to assemble them, the protrudent pillar 111 of the chamber of the shell 11 is inserted into the spring 12. Thereafter, the fixing pillars 132 of the gear 13 are located upward such that the central hole 131 of the gear 13 is posited to aim at the protrudent pillar 111. In addition, the tooth-shaped periphery of the gear 13 is engaged with the trench 112 of the shell 11. Thereafter, the chamber of the shell 10 is coupled with the chamber of the shell 11 so as to insert the coupling pillar 101 of the shell 10 into the protrudent pillar 111 of the shell 11. Thereafter, a rivet 105 is inserted into the coupling pillar 101 and riveted so as to integrate the shell 11, the spring 12, the gear 13, and the shell 10 into a unity. Finally, the body of the cylinder of the button 14 is inserted into the openings 103 and 104 so as to hook the openings 103 and 104 by using the protrudent flanges 142, thereby positing the button 14 in the trenches of the shell 10 securely to prevent them from detachment. As a result, the assembling process of the rotating shaft 1 is completed.

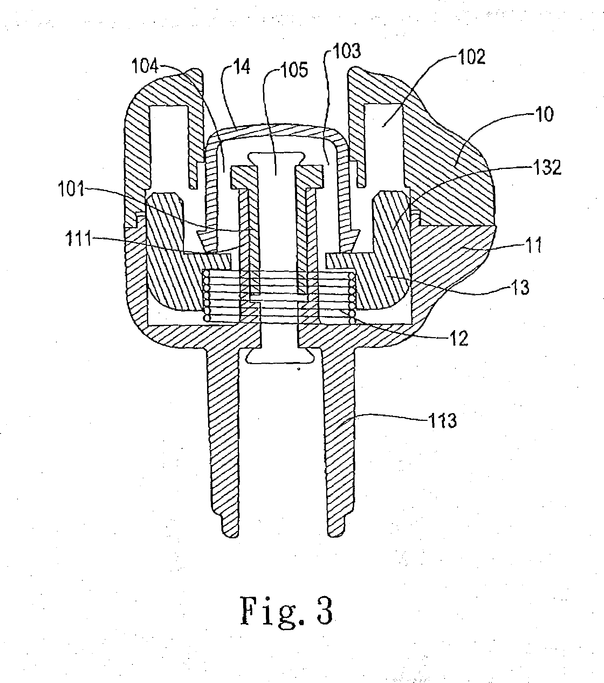

If the button 14 of the rotating shaft 1 is not pressed, the spring 12 is located to lean against the bottom surface of the gear 13. As a result, the fixing pillars 132 of the gear 13 are located in the fixing trenches 102. In addition, the tube on the other end of the shell 10 is perpendicular to the tube on the other end of the shell 11. Moreover, if the button 14 is pressed down, the body of the cylinder is also pressed down to lean against the top surface of the gear 13 so as to separate the fixing pillars 132 of the gear 3 from the fixing trenches 102 (shown in FIG. 3). As a result, the shells 10, 11 are rotatable so as to change the included angle between the tubes of the shells 10, 11.

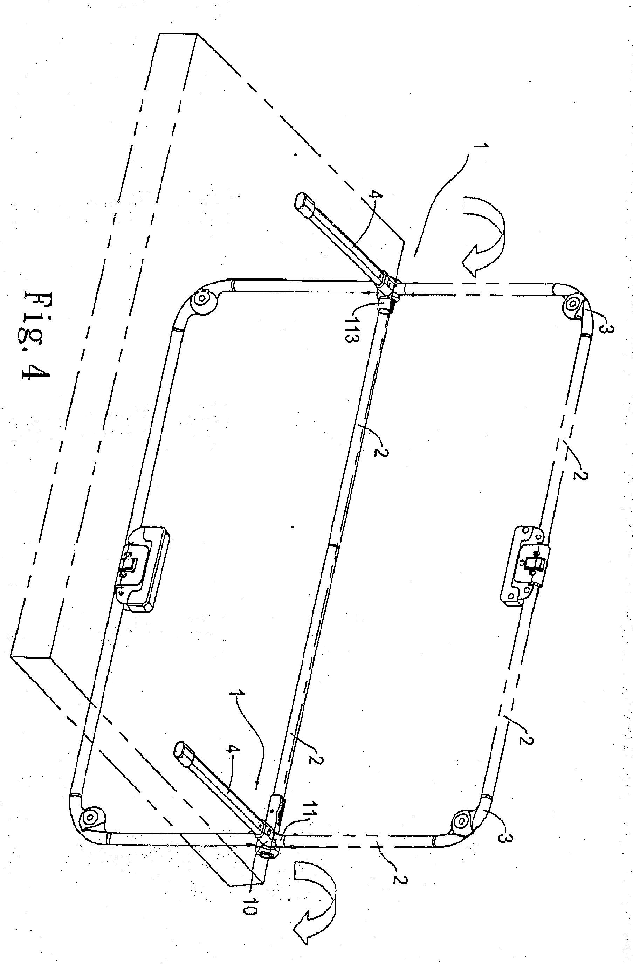

Referring to FIG. 4, when in use, two rotating shafts 1 are both utilized. In addition, a flat tube 4 is coupled with the tubes of the shells 10 simultaneously; wherein the tubes of the shells 11 are coupled with two tubes 2, respectively. In addition, the tubes 2 are coupled with one end of two turning devices 3, respectively. Besides, another two tubes 2 are further coupled with the other end of the turning devices 3, respectively. The horizontal jointers 113 of the shells 11 are further coupled with further two tubes 2, respectively. Finally, the horizontal tubes 2 are coupled with each other to form a longer handrail.

The handrail is located above the lateral of a sickbed. If there is a need to put down the handrail, the button 14 on one side of the handrail is pressed down first and the vertical tubes 2 are shifted slightly to enable the shell 11 to drive the gear 13, thereby separating the fixing pillars 132 from the fixing trenches 102. At this moment, the user can go to the other side of the sickbed to press the button 14 on the other side of the handrail. Thereafter, the vertical tubes 2 are rotated downward so as to rotate and shift the handrail to the lower portion of the sickbed.

In accordance with the foregoing description, it is apparent that the present invention provides the following advantages, wherein:
1. the rotating shaft is easily operable and provides accurate protection no matter it is applied to a shorter baby bed or a longer sickbed; and
2. there is no need to press two buttons of the rotating shafts simultaneously, whereby one of which is pressed down first and the rest is pressed down subsequently.

In summary, the present invention indeed achieves the expected objects of providing the easily operable rotating shaft. Accordingly, the present invention satisfies the requirement for patentability and is therefore submitted for a patent.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments, which do not depart from the spirit and scope of the invention.

## Claims

1. A rotating shaft for a handrail of a bed comprising:
two shells; a spring; a gear; and a button, wherein two fixing pillars are protrudent from one side of the gear, two matched chambers are formed on the shells, respectively, for being coupled with each other, wherein two fixing trenches are formed in the chamber of one of the shells for holding the fixing pillars of the gear, wherein a button trench is formed on the backside of the fixing trenches for holding a button, wherein the shells are coupled with each other after the spring and the gear are located in the chambers of the shells, whereby the fixing pillars of the gear are separable from the fixing trenches of the shell by pressing the button such that the other shell is angularly rotatable.

2. The rotating shaft of claim 1, wherein a coupling pillar and a protrudent pillar are protrudent from center regions of the chambers of the shells, respectively, for being coupled with each other.

3. The rotating shaft of claim 2, wherein the gear has a tooth-shaped periphery and a central hole conformal to the protrudent pillar.

4. The rotating shaft of claim 3, wherein the other shell has an inner-toothed periphery for engaging with the tooth-shaped periphery of the gear.

5. The rotating shaft of claim 1, wherein two arc-shaped openings are formed on the bottom of the button trench and staggered from the fixing trenches.

6. The rotating shaft of claim 1, wherein the button is a hollow cylinder having a top surface, two trenches are formed oppositely on the body of the cylinder, and two protrudent bottom flanges are mounted oppositely on the outside of the remained body of the cylinder.
